# EUROPEAN PATENT SPECIFICATION

(11) **EP 1 472 688 B1**
(45) Date of publication and mention of the grant of the patent: **18.10.2006**
(21) Application number: 02755163.9
(22) Date of filing: 14.08.2002
(51) Int. Cl.: G11B 17/22

(54) **DATA STORAGE DRIVES IN AN AUTOMATED DATA STORAGE LIBRARY**
DATENSPEICHERUNGSLAUFWERKE IN EINER AUTOMATISCHEN DATENSPEICHERUNGSBIBLIOTHEK
LECTEURS DE STOCKAGE DE DONNEES DANS UNE BIBLIOTHEQUE DE STOCKAGE DE DONNEES AUTOMATISEE

(30) Priority: 10.09.2001 US 948627; 10.09.2001 US 948656
(43) Date of publication of application: 03.11.2004
(73) Proprietor: International Business Machines Corporation, Armonk, N.Y. 10504 (US)
(72) Inventor: BASHAM, Robert, Beverley, Aloha, OR 97007 (US); DAHMAN, Kirby, Grant, Tucson, AZ 85718 (US); DAY III, Kenneth, Fairclough, Tucson, AZ 85748 (US); JESIONOWSKI, Leonard, George, Tucson, AZ 85749 (US)
(74) Representative: Waldner, Philip
(86) International application number: PCT/GB2002/003743
(87) International publication number: WO 2003/023597

(56) References cited:
- EP-A- 1 017 047
- WO-A-01/22210
- US-A- 5 522 055

## Description

### Field of the Invention

This invention relates to data storage drives of an automated data storage library which stores portable data storage cartridges in storage shelves and transports the portable data storage cartridges between the storage shelves and the data storage drives for mounting and demounting the portable data storage cartridges at the data storage drives, and, more particularly, to the allocation of those data storage drives and the virtualization of those data storage drives with respect to host applicators which communicate with the library.

### Background of the Invention

Automated data storage libraries are increasingly employed for storage of large quantities of data, typically data that is infrequently accessed by the host applications. The data is stored on portable data storage cartridges which are stored in storage shelves. Examples of portable data storage cartridges are cartridges containing a length of magnetic tape or containing an optical disk.

When the data is accessed by the library, an accessor robot operated by a robot control of the library, grips the desired portable data storage cartridge from the storage shelf at which it is stored and transports the portable data storage cartridge between the storage shelves and data storage drives for mounting and demounting the portable data storage cartridges at the data storage drives, and returning the portable data storage cartridge to the same or a different storage shelf.

Automated data storage libraries are sometimes arranged so that, even in the presence of multiple host applications, the library and its data storage drives appear to each host application as its own library and drives. In one example, a specific set of storage shelves and at least one data storage drive of the library is dedicated to each host application. Upon a request for data from the host application, the portable data storage cartridge having the requesting data is accessed by the accessor robot of the library, and delivered to a data storage drive dedicated to the host application for use by the host application. The host application can thus conduct a series of mounts on a known drive. This is very efficient from the standpoint of the host, since its drive is always available, and the drive addressing is direct and immediate. The library may also appear to be directly assigned to the host application, but the accessor robot is actually shared. It is less efficient from the standpoint of the drive usage in that, if each of the host applications is not constantly using its dedicated data storage drive(s), the drives are often idle. Since the drives are assigned to different host applications, any host application that is particularly active is unable to "borrow" drives from another host application, and, for example, if all of the assigned drives are utilized and data on a different cartridge is needed, the host application may have to wait until the host application itself demounts one cartridge or releases its drive in order to access data on the other cartridge. Any "borrowing" of a drive from another host application would require reconfiguring at least the device drivers for both host applications. Should a host application grow in its needs, new drives cannot be assigned to that host application without reconfiguring at least the host application.

In another example, the host applications are not allowed direct communication with a data storage drive. Rather, a "virtual" library is established which employs cache storage (typically disk drives) to store data received from host applications, acting as though the cache storage is a data storage drive and is writing the data to portable data storage cartridge. The data may be reaccessed while in the cache, called a "cache hit". If not reaccessed, the library downloads the data from the cache storage to a cartridge employing a data storage drive selected by the library. When data is requested by the host application, and it is not in cache, called a "cache miss", the library employs a table to find the cartridge storing the data, operates the accessor robot to access the cartridge, finds an available data storage drive, operates the accessor robot to mount the cartridge on the drive, reads the data from the cartridge and uploads the data to cache. From the standpoint of the library, the usage of the library components is efficient. However, cache storage is expensive and adds cost and complexity. The cache storage must be sufficiently large to handle large data sets and must have good staging and destaging algorithms to avoid excessive "cache miss" situations. The host applications communicate with the cache rather than directly with a drive, and any host application can contend for use of shared components, leading to less predictable performance. Should a drive fail and need to be replaced, the host application may be unable to recover from the exception condition, especially if no other drive is available. It may be possible to limit the reconfiguration to a change of serial number if the drives are homogeneous in all other respects. Upgrading, exchange or sharing of heterogeneous drives (drives of at least one different characteristic) is prohibited without a major reconfiguration which will accommodate the different characteristics. Limited drive sharing may be provided by a host application that is partitioned amongst various host processors, but the partitions must constantly inform each other of their use of the drive so as to stay within synchronization, and sharing outside of the host application is not allowed.

US Patent publication 5522055 discloses an electronic file system including a record-medium, a terminal device outputting access requirements, and a carrier mechanism for setting one of the first recording medium and second recording medium into a recording medium drive in response to an access requirement outputted from the terminal device. US Patent publication 522055 is reflected in the preamble of the independent claims.

### Summary of the Invention

An object of the present embodiment of the invention is to provide an automated data storage library system which employs shared components in an efficient manner.

Another object of the embodiment of the present invention is to allow expanding host applications or the library to receive the benefit of additional drives without requiring reconfiguration of the host applications or the library.

An allocation system and computer implemented method are provided for allocating physical data storage drives of an automated data storage library. The library stores a plurality of portable data storage cartridges in storage shelves, and an accessor robot transports the portable data storage cartridges between the storage shelves and the data storage drives for mounting and demounting the portable data storage cartridges at the data storage drives.

The allocation system comprises a drive resource provider coupled to, or of, the library, responsive to the requests for data storage drives, e.g., from host application(s). The drive resource provider assigns a plurality of the library physical data storage drives to a pool, and allocates and deallocates the data storage drives from the pool for the benefit of the host applications.

In accordance with the present invention, the drive resource provider, upon receiving a request for a data storage drive when all of the data storage drives of the pool are allocated, indicates to the library to hold any mount of a portable data storage cartridge relative to the request. Additionally, a drive image provider, upon receiving the request when all of the drives are allocated, provides an indication that the requested drive is currently unavailable to complete any subsequent command requiring a mounted portable data storage cartridge.

The response may comprise a fake completion response called therein "not ready". Thus, the host application is assured that it has a data storage drive, and, if needed, can retry or issue its next command relative to the drive. If the next command does not require that the drive be ready or that portable data storage cartridge be mounted and ready, the library may be able to handle the command immediately.

The drive resource provider, subsequent to providing the indications, awaits a request for deallocation of a data storage drive and demount of any portable data storage cartridge at the deallocated data storage drive, and allocates the deallocated data storage drive to the request for a drive, and indicates to the library to release the hold of the mount relative to the request.

The drive resource provider additionally assigns at least one of the plurality of library data storage drives as spare drives, outside of the pool. Then, the drive resource provider, subsequent to providing the indications, allocates one of the at least one spare drives to the request, and indicates to the library to release the hold of the mount relative to the request.

The drive resource provider, in an alternative embodiment, waits a predetermined time period, and, if during the predetermined time period a request for deallocation, of a data storage drive and demount of any portable data storage cartridge at the deallocated data storage drive occurs, allocates the deallocated data storage drive to the request; else, subsequent to expiration of the time period, the drive resource provider allocates the spare data storage drive to the request.

As still another embodiment, the library comprises a plurality of virtual libraries, and at least one of the plurality of virtual libraries has a higher priority than other of the virtual libraries. The drive resource provider determines the priority of the virtual library of the virtual drive request, and, if the virtual library is of the higher priority, allocates the spare drive in response to the request, and indicates to the library to release the hold of the mount relative to the request.

In a further embodiment, the use of spare drives is limited. The drive resource provider increments a count each instance the request is received when all of the data storage drives of the pool are allocated.

The drive resource provider compares the incremented count to a predetermined limit, and, upon the incremented count being less than the predetermined limit, allocates the spare data storage drive.

As a still further embodiment, the drive resource provider additionally, subsequent to the allocation of the spare data storage drive, posts a message indicating use of the spare data storage drive. The posted message, in one embodiment, comprises a notification to a system operator that action may be taken to transfer a spare data storage drive to the pool. As an example, transferring a spare drive to the pool will result in an increased cost for the library. If the transfer is made, the drive resource provider adds the spare data storage drive to the pool, deleting the drive as a spare data storage drive.

In another embodiment, as an incentive, the posted message additionally comprises a notification that failure to transfer the spare drive to the pool will result in future unavailability of spare data storage drives, and the drive resource provider, upon absence of a request to transfer at least one spare data storage drive to the pool, deletes the assignment of at least one of the plurality of library data storage drives as spare drives, such that the assigned spare drives become unassigned.

As the result, the host application is allocated a drive as soon as a drive is deallocated, or is allocated a spare drive. Additionally, if needed, the system is provided with spare drives, and as the system requirements grow, the system operator is allowed to selectively increase the number of data storage drives in the pool by permanently adding spare drives to the pool, without a requirement to first contact a salesperson.

An object of the present invention is to allow host applications to each gain access to one or more shared data storage drives of an automated data storage library, and have the appearance that the drives are dedicated to the host without requiring cache storage.

Another object of the present invention is to allow the addition, deletion or replacement of drives without requiring a reconfiguration of the host application device driver.

A virtualization system directs communication between host applications and physical data storage drives of an automated data storage library. The library stores a plurality of portable data storage cartridges in storage shelves and provides an accessor robot for transporting the portable data storage cartridges between the storage shelves and the data storage drives.

At least one drive image provider is coupled to the host application, providing at least one image of at least one virtual data storage drive to the host application, providing fixed identifications and fixed sets of responses to the host application for each of the virtual drives, and directing communication between the host application and data storage drives of a pool of "n" data storage drives of the automated data storage library.

A drive resource provider is coupled to the drive image providers. At any one time, the drive resource provider has assigned any number "m" of the pool of "n" physical data storage drives to the drive image providers, and "n" - "m" of the pool of data storage drives are indicated as freed and available for assignment. The drive resource provider responds to a triggering event requesting a virtual drive for the host application, dedicating one of the "n" - "m" data storage drives of the pool to the virtual drive, indicating the dedication for a drive image provider for the requesting host application as one of the fixed plurality of virtual drives.

The drive image provider characterizes the dedicated data storage drive to the requesting host application as one of the fixed virtual drives, and directs communication to the dedicated data storage drive by the requesting host application as the virtual drive.

Prior to the drive resource provider dedicating a drive, the drive image provider characterizes the virtual drive to the requesting host application as "not ready". As an example, "not ready" comprises a reported state that no media is loaded in the drive.

In one embodiment, the triggering event comprises a request by the requesting host application to mount a selected one of the portable data storage cartridges at a virtual data storage drive. The drive resource provider indicates to the library which one of the "n" - "m" data storage drives of the pool is the drive dedicated to the host application for mounting the selected portable data storage cartridge.

As an alternative embodiment, the triggering event comprises a "Reserve" request by the requesting host application for a virtual data storage drive of the drive image provider. The "Reserve" request is received by the drive image provider, notifying the drive resource provider as a request for a drive of the pool. The drive resource provider additionally indicates for the library that the dedicated data storage drive is dedicated to the requesting host application for mounting any portable data storage cartridge selected for the data storage drive as identified by the fixed identification as the virtual drive.

As a further alternative embodiment, the triggering event comprises a command by the requesting host application for a virtual data storage drive. The drive resource provider additionally indicates for the library that the dedicated data storage drive is dedicated to the requesting host application for mounting any portable data storage cartridge selected for the data storage drive as identified by the fixed identification as the virtual drive.

The drive resource provider responds to a detriggering event relating to the host application and designating a data storage drive dedicated to the detriggering host application, indicating the data storage drive is freed from the drive image provider, and adds the drive to the freed data storage drives of the pool. In one embodiment, the detriggering event comprises a command by the detriggering host application to demount the one of the portable data storage cartridges from the dedicated data storage drive, identified as one of the virtual data storage drives. In such case, the drive resource provider provides an indication for the library identifying the dedicated data storage drive as the virtual drive at which the portable data storage cartridge is mounted. In another embodiment, the detriggering event comprises a command by the detriggering host application to release the dedicated data storage drive, identified as one of the virtual data storage drive.

In a still further embodiment, the detriggering event comprises non-use of the dedicated data storage drive for a predetermined time-out period. Upon expiration of the predetermined time-out period, the drive resource provider determines whether one of the portable data storage cartridges remains mounted at the dedicated data storage drive, and notifies the library to demount the mounted portable data storage cartridge.

In another embodiment, the library comprises a plurality of virtual libraries, and at least one of the plurality of the virtual libraries is assigned a higher priority. Thus, upon "m" - "n" equaling zero, meaning that all of the data storage drives are dedicated, and upon a triggering event for a virtual drive of the higher priority virtual library, the drive resource provider deallocates a data storage drive from a lower priority virtual library, notifies the drive image provider of the deallocation, notifies the library to demount any portable data storage cartridge from the deallocated data storage drive, and dedicates the deallocated data storage drive to the virtual drive of the higher priority virtual library.

Additionally, data storage drives may be added, deleted, or exchanged in the pool of data storage drives of the drive resource provider, but the drive image provider characterizes the virtual drives as unchanged.

In one embodiment, the drive resource provider communicates with the drive image provider employing a drive image table having a list of the virtual data storage drives comprising the image, and indicating the data storage drives of the pool dedicated as the virtual drives.

For a fuller understanding of the present invention, reference should be made to the following detailed description taken in conjunction with the accompanying drawings.

### Brief Description of the Drawings

FIG. **1** is a diagrammatic representation of a virtualization system in accordance with the present embodiment;
FIG. **2** is an isometric view of an automated data storage library which may implement embodiments of the present invention;
FIG. **3** is a block diagram of the automated data storage library of FIG. **2,** together with host applications and components intermediate the host applications and the automated data storage library which may implement embodiments of the present invention;
FIGS. **4A** and **4B** are respectively top and end views of an exemplary portable data storage cartridge which may be stored in the storage shelves of the automated data storage library of FIGS. **2** and **3;**
FIGS. **5A** and **5B** are diagrammatic illustrations of exemplary drive image tables in accordance with the present embodiment;
FIG. **6** is a diagrammatic illustration of an exemplary drive table in accordance with the present embodiment;
FIG. **7** is a diagrammatic illustration of an exemplary library image table in accordance with the present embodiment;
FIG. **8** is a flow chart depicting an embodiment of the method of the present invention for configuring or altering the configuration of the drives of the automated data storage library of FIGS. **2** and **3;**
FIG. **9** is a flow chart depicting an embodiment of the method of the present invention for the drive image provider of FIG. **1;**
FIGS. **10A** and **10B** are a flow chart depicting an embodiment of the method of the present invention for the drive resource provider of FIG. **1** for triggering events;
FIG. **11** is a flow chart depicting an embodiment of the method of the present invention for the drive resource provider of FIG. **1** for detriggering events; and
FIGS. **12A**, **12B** and **12C** are flow charts depicting an alternative embodiment of the present invention for the drive resource provider of FIG. **1** for locking data storage drives.

### Detailed Description of the Invention

This invention is described in preferred embodiments in the following description with reference to the Figures, in which like numbers represent the same or similar elements. While this invention is described in terms of the best mode for achieving this invention's objectives, it will be appreciated by those skilled in the art that variations may be accomplished in view of these teachings without deviating from the spirit or scope of the invention.

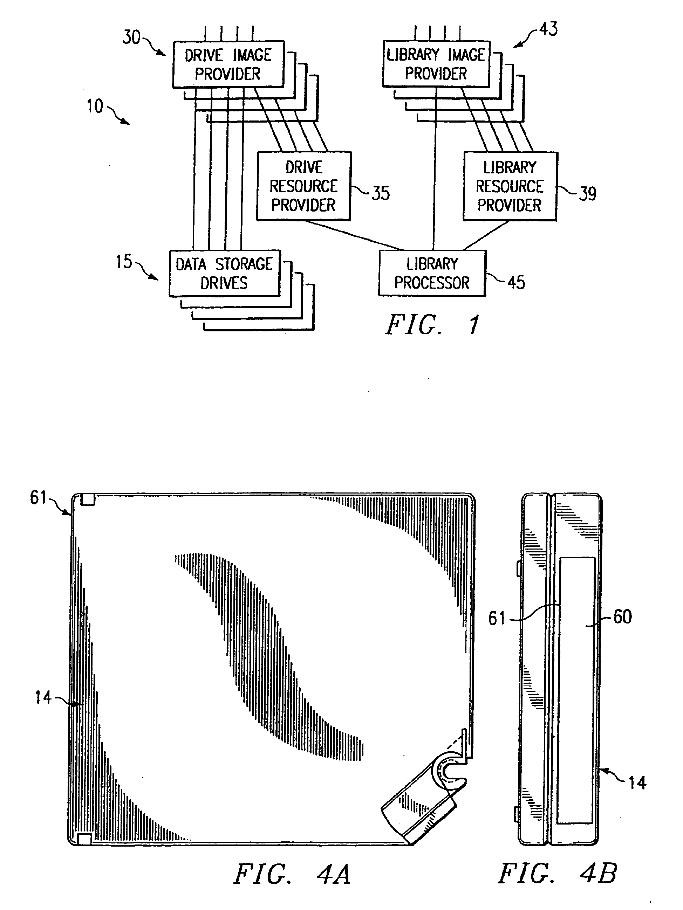

Referring to FIGS. **1-3,** an embodiment of a virtualization system **10** is illustrated which directs communication between host applications, such as host applications **11, 12,** and data storage drives **15** of an automated data storage library **17.** The library stores a plurality of portable data storage cartridges **14** in storage shelves **16** and provides an accessor robot **18, 20** for transporting the portable data storage cartridges between the storage shelves and the data storage drives.

At least one drive image provider **30** is coupled to one or more host applications **11, 12,** and provides an image of at least one fixed virtual data storage drive to each host application, while actually directing communication between the host application and data storage drives of a pool of "n" data storage drives **15** of the automated data storage library. The drives **15** of the library are thus shared between the host applications. The drive image provider depicts the image in communications with the host by employing fixed identifications and fixed sets of responses to the host application for each of the virtual drives, such that the host application is provided with the appearance that all of the host's virtual drives are dedicated to the host all of the time. Further, the underlying physical drives may be different at various accesses, and drives may be added, deleted or replaced, all without requiring a reconfiguration of the host application device driver.

A drive resource provider **35** is coupled to the drive image providers **30.** At any one time, the drive resource provider has assigned any number "m" of the pool of "n" data storage drives to the drive image providers, and "n" - "m" of the pool of data storage drives are indicated as freed and available for assignment.

The drive resource provider **35** responds to a triggering event requesting a drive for the host application virtual drive, and dedicates one of the "n" - "m" data storage drives of the pool as the virtual drive, indicating the dedication for the drive image provider for the requesting host application as one of the fixed virtual drives.

The drive image provider **30** characterizes the dedicated data storage drive to the requesting host application as one of the fixed virtual drives, and directs communication to the dedicated data storage drive **15** by the requesting host application **11, 12** as the virtual drive.

Prior to dedication of a physical drive as a virtual drive, the drive image provider **30** characterizes the virtual drive to the requesting host application as "not ready". As an example, "not ready" comprises a fake completion response of a reported state that no media is loaded in the drive.

In accordance with the present invention, the drive resource provider **35,** upon receiving a request for a data storage drive when all of the data storage drives of the pool are allocated, indicates to the library to hold any mount of a portable data storage cartridge relative to the request. Additionally, upon receiving the request when all of the drives are allocated, an indication may be made that the requested drive is available for mounting a portable data storage cartridge, but is currently unavailable to conduct any subsequent command requiring a mounted portable data storage cartridge. Thus, the host application **11, 12** is assured that it will have a data storage drive, and can retry or issue its next command relative to the drive. If the next command does not require that the drive be ready or that portable data storage cartridge be mounted and ready, the library may be able to handle the command.

The drive resource provider **35,** subsequent to providing the indications, awaits a request for deallocation of a data storage drive and demount of any portable data storage cartridge at the deallocated data storage drive, and allocates the deallocated data storage drive to the request for a drive, and indicates to the library to release the hold of the mount relative to the request.

In one example, one or more library image providers **43** may also be provided for virtual libraries, and will comprise a set of the virtual drives and a set of the storage shelves **16,** which are defined by a library resource provider **39.** Data storage drives **15** are shared between virtual libraries, but storage shelves 16 are preferably separate.

A host application **11, 12** may comprise a host processor, such as an IBM RS/6000 or an IBM eServer pSeries processor, and all the applications running on the host processor, or may comprise one of multiple applications running on the host processor. Thus, the host applications are depicted as each comprising a processing system having a processor **36** and storage **38.**

The automated data storage library **17,** as an example, comprises an automated tape cartridge storage and retrieval library for storing and accessing data storage media comprising physical volumes of magnetic tape cartridges, such as an IBM 3584. Alternatively, the automated data storage library **17** may comprise an optical storage and retrieval library or a tape cassette library, etc., each defined herein as storing portable data storage cartridges. The data storage drives **15** read and/or write data on the media, and may comprise a processor. The library further comprises a robot controller **41** for operating the accessor robot **18, 20,** and a library manager **40.** The accessor robot **18, 20** comprises a gripper **20** for engaging a selected portable data storage cartridge **14,** and an accessor **18** for moving the gripper between a storage shelf **16** and a drive **15,** or between storage shelves. The accessor robot **18, 20** may also comprise a bar code scanner **22,** or similar vision system, mounted on the gripper **20,** to "read" identifying cartridge labels. The data storage drives **15** can be optical disk drives or magnetic tape drives and the portable data storage cartridges can comprise cartridges or cassettes containing optical or magnetic media, respectively, or any other removable storage.

The robot controller **41** and library manager **40,** comprise at least one computer processor and associated storage, and are coupled to an input/output interface **42** and a terminal **28.** The computer processor may comprise, for example, an IBM RS/6000 processor. Alternatively, robot controller **41** and library manager **40** may each comprise a computer processor, and the computer processors are interconnected. In the example, library manager **40** comprises a computer processor **45** and associated storage **46.** The terminal **28** may comprise a station for reading a data storage medium, such as a floppy disk or CD-ROM.

The library manager **40** is coupled with, and controls the load/unload and related actions of, the drives **15,** and the library manager **40** is coupled with, and coordinates the operation of the robot controller **41.** The library manager is coupled through the interface **42** to the host applications **11, 12.** The library manager **24** has a library manager database which is stored in storage **46** (typically one or more hard disk drives or flash EEPROM) for tables and programs. Data access commands and information to be recorded on, or to be read from, selected portable data storage cartridges **14** are transmitted between the drives **15** and the host applications as directed by the data image provider **30.** The library manager **40** defines each portable data storage cartridge in terms of its identifier, which is typically a volume serial number, or VOLSER, or, alternatively, in terms of its location.

The host applications **11, 12** are typically coupled to the library **17** by one or more components intermediate the host application and the automated data storage library.

An example of an intermediate component is a host bus adapter **50.** In one example, the host bus adapter **50** comprises interfaces **52** and **53** which each interfaces with the appropriate connections to couple to the library or to other intermediate components, and to the host applications **11, 12,** such as PCI, ESCON, FICON, SCSI, FIBER CHANNEL, etc. The adapter comprises a processor **54** and non-volatile memory **55,** and suitable buffers and interconnections. An example of a host bus adapter **50** comprises an IBM eServer pSeries Gigabit Fibre Channel Adapter. Host application **12** is shown with an interface **53** which may comprise an adapter.

Another example of an intermediate component comprises a gateway or router **56** having a plurality of interfaces **57** with the appropriate connections to interconnecting a number of processors in a network, such as discussed above. The gateway or router comprises a processor **58** with a non-volatile memory **59** for storing the operating system, etc. An example of a gateway or router is the IBM 2108 SAN Data Gateway. Other suitable terminology for the present adapter, router or gateway are "controller", "director" or "intelligent switch", and those of skill in the art may envision other applications.

The processors **54, 58** may comprise microprocessors, such as the Intel i960.

In accordance with the present invention, the drive image providers **30** and/or the drive resource provider **35** may be embedded in any of a host application **11, 12,** an intermediate component **50, 56,** or the automated data storage library **17.** As one example, the drive image providers **30** are each incorporated into a device driver of the associated host application **11, 12,** and the drive resource provider is incorporated into a component **56** intermediate the host applications and the automated data storage library **17.** The drive resource provider must be at a component coupled to each of the hosts, or host bus adapters of hosts, having a drive image provider. As still another example, the drive image provider(s) **30** comprise a component **50, 56** intermediate the host application(s) **11, 12** and the automated data storage library **17,** and the drive resource provider **35** comprises a component **56** intermediate the host bus adapter **50** or host and the library **17.** As a further example, drive image providers **30** comprise device drivers of the associated host applications **11, 12,** and the drive resource provider **35** comprises a component of the automated data storage library **17,** such as the library manager **40.** A still further example comprises the drive image provider(s) **30** as incorporated in a component **50, 56** intermediate the host application and the automated data storage library, and the drive resource provider **35** comprises a component of the automated data storage library **17.**

The library image provider(s) **43** and the library resource provider **39** are preferably both incorporated into the automated data storage library **17.**

Each of the processors 36 of the host applications **11, 12,** processors **54, 58** of the intermediate components **50, 56,** and processor **45** of the library manager **40** of the library, may be provided with an operating system and application programs, and may comprise programs for operating in accordance with the present invention. Each processor may be provided with a database, respectively, **38, 55, 59, 46,** which includes storage (typically non-volatile memory or one or more hard disk drives) for tables and programs. The application programs may comprise one or more computer program products, comprising computer readable program code. The computer program product of the present invention may be supplied with an application program and stored in the provided storage, may be supplied with a diskette or CD-ROM at terminal **28,** and comprises an article of manufacture, may be received from one of the host systems **11, 12,** may be received from the network, or may be received by other similar means. The requirement for the storage media or memories is that they store digital representations of computer executable instructions. The computer readable program code operates the devices through their computer processor or processors.

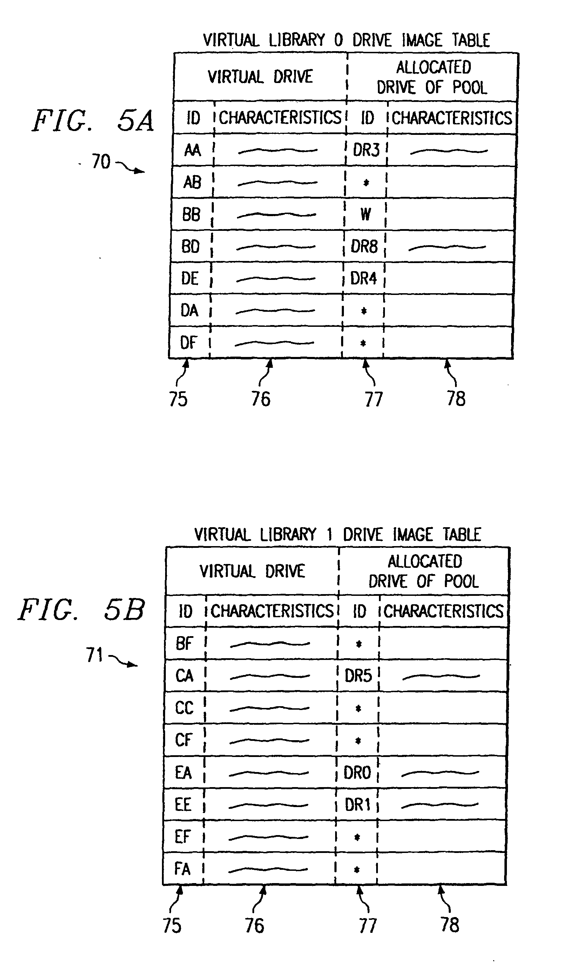

In FIGS. **4A** and **4B,** an example of a portable data storage cartridge **14** is illustrated, which, for example, comprises a magnetic tape cartridge. The cartridge **14** has an identifying label **60** on an outer edge **61.**

FIGS. **5A** and **5B** illustrate examples of drive image tables **70, 71** that are generated and maintained by the drive resource provider **35** and which are provided to the drive image providers **30** of FIG. **1,** in which the drive resource provider maps the allocated and dedicated drives of the pool of data storage drives to the virtual drives of each host application. The drive image tables may be read by the drive image providers periodically from the drive resource provider and updated, for example, each half second, or each drive image provider may access the associated drive image table as needed. The drive image provider does not need to refresh the table each time, but rather may look for any changes.
The drive image table includes a list **75** of the virtual drives that the drive image provider is to report and provide responses for. As an example, in SCSI terms, the list **75** may comprise a fixed address such as a tape drive LUN identifier for each of the virtual drives. The drive image provider provides an image to a host application of one or more virtual data storage drives in fixed terms, and those drives are identified by means of the list **75.** The fixed list is supplemented by an identification of the characteristics of each virtual drive **76** so that the drive resource provider may provide fixed identifications and fixed sets of responses to the host application for each of the virtual drives. As one example, the characteristics may include an unique serial number for the virtual drive. As a further example, the characterization may comprise the same address for the virtual drive. As an additional example, the virtual drive may be provided with characteristics which include a type or manufacturer designation and a model number. This will allow the drive resource provider to determine the fixed set of responses from its database. As an alternative embodiment, the drive image table of the drive resource provider may comprise only an identifier **75** for each virtual drive, and the drive image provider may maintain the characteristics **76** for each virtual drive.

As the drive resource provider dedicates drives from the pool of physical drives of the library to the drive image provider for the host application, those drives are also identified **77,** for example, by LUN, in SCSI terms. In the illustrated example, the "*" represents an indication that no physical drive is currently assigned virtual drive. Also, a "W" represents that a physical drive will be assigned, but none is currently assigned, as will be discussed. Optionally, the drive resource provider may also provide the characteristics **78** of each assigned physical drive, such as a serial number, type, manufacturer designation and/or model number.

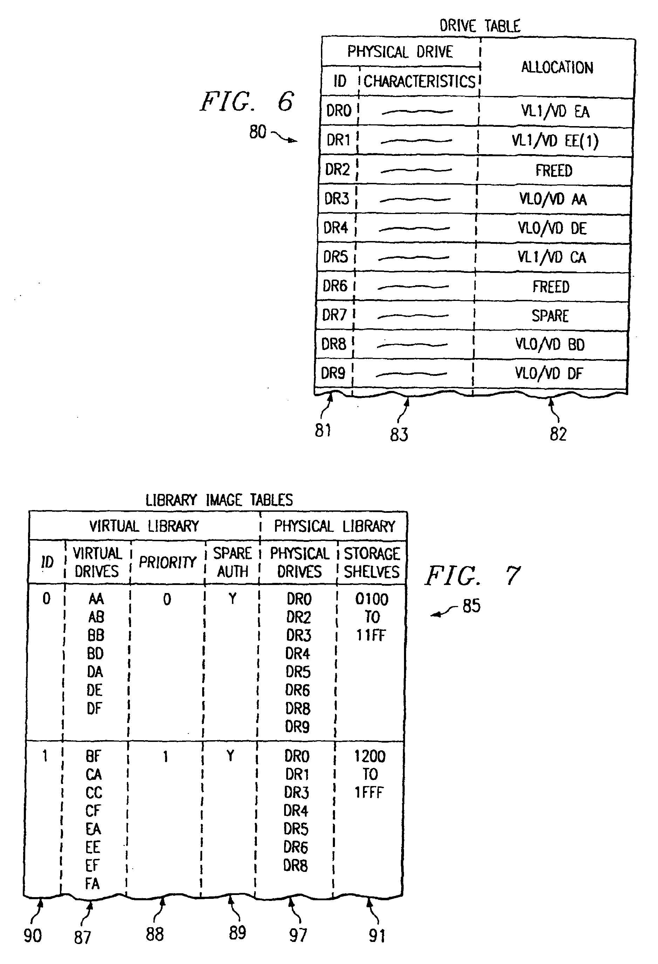

Referring additionally to FIG. **6,** the drive resource provider **35** and/or the library resource provider **39** of FIG. **1** maintains a drive table **80** of the physical drives **81** and their current assignment or status **82.** Preferably, the table **80** also includes the characteristics **83** of each of the physical drives, as above.

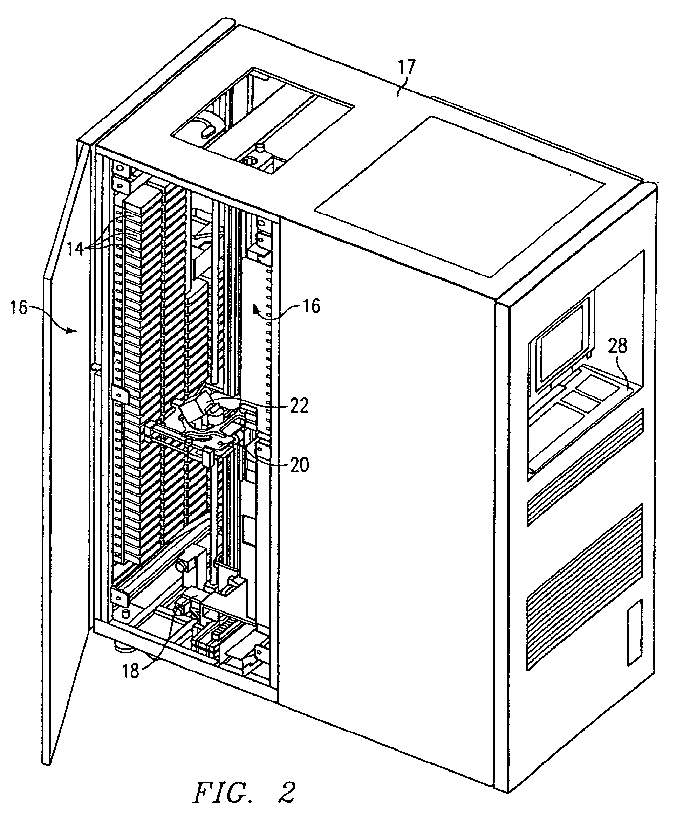

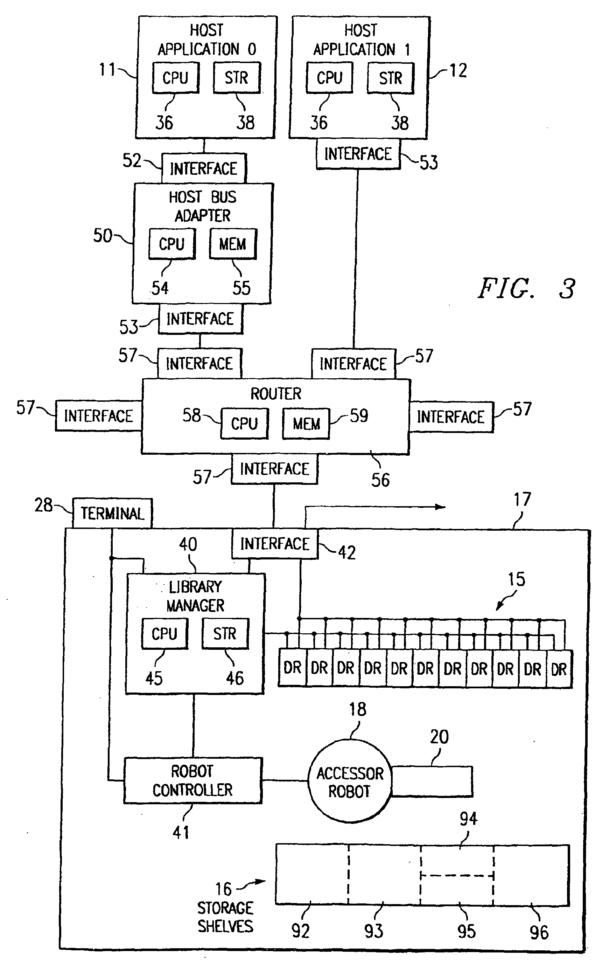

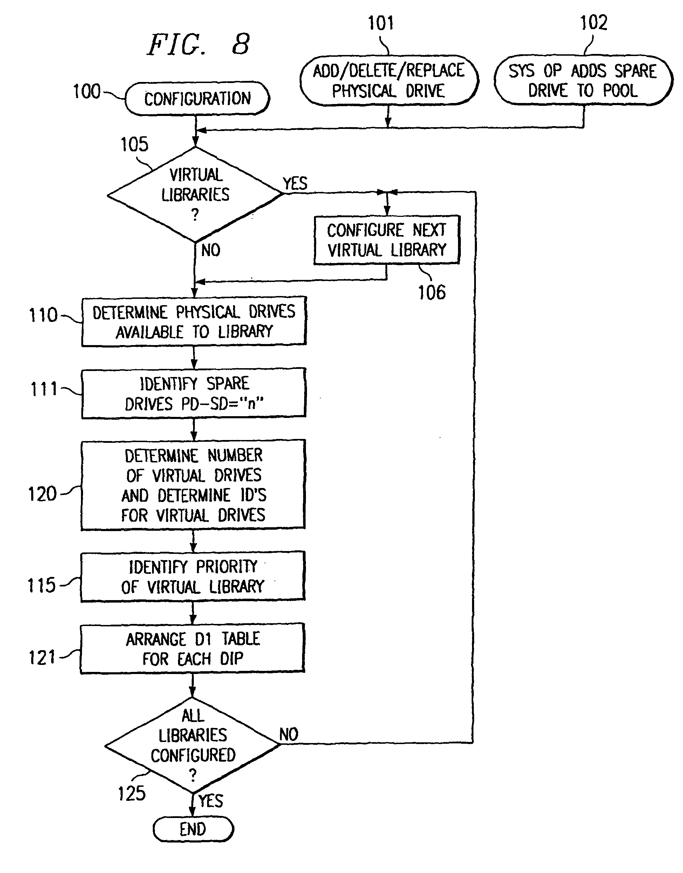

Referring additionally to FIG. **7,** the library **17** of FIGS. **2** and **3** may be arranged to be directly coupled to the host applications and receive, for example, requests for the library to mount identified portable data storage cartridges **14** from storage shelves **16** at identified virtual drives. To accommodate these requests, the library comprises at least one library image table **85.** The table identifies the virtual libraries **90,** and the virtual drives **87** dedicated to each virtual library. Additionally, the library may indicate the priority **88** of the virtual library, and which virtual library or virtual drive is authorized **89** to use a spare drive. This information is presented to the host applications by means of the library image provider **43** of FIG. **1.**

Each virtual library is assigned a set of the storage shelves **16.** The same virtual library may be shared by multiple host applications or may comprise a separate virtual library for each host application, or there may be a mix. Table **85** identifies the virtual libraries in column 90, and the set of storage shelves **16** of FIGS. **2** and **3** assigned to each virtual library are identified in column **91.** As is known to those of skill in the art, the storage shelves of an automated data storage library may be partitioned by the library manager such that each virtual library is assigned a specific set of storage shelves, such as storage shelves **92-96** in FIG. **3.** The virtual libraries are arranged by the library resource provider **39** of FIG. **1.** Preferably, the virtual libraries, as well as the host applications, share all or most of the physical drives **15** of the library **17** of FIGS. **2** and **3,** as depicted in column **97.** Certain data storage drives may be withheld from a pool of "n" drives for a virtual library as being of a type that does not match the requirement of the virtual drives. One example is a low speed drive useful in only particular situations. Another example is a streaming drive not useable for small data records.

In the illustrated tables **70, 71, 80** and **85** of FIGS. **5A, 5B, 6** and **7,** as examples, physical drive **"DR3"** is assigned in the drive image table **70** as virtual drive **"AA",** and is in virtual library **"0".** The drive will be deallocated when released by the host application or when the host application issues a command to demount a portable data storage cartridge mounted in the drive. Physical drive **"DR1"** is assigned in drive image table **71** for virtual library **"1",** and is dedicated as virtual drive **"EE".** The "(L)" is an indication that the physical drive is locked to the host application as the virtual drive until specifically released by the host application, and the drive will not be deallocated when the host application issues a command to demount a portable data storage cartridge mounted in the drive.

The relative priorities **88** of the virtual libraries means that, in the circumstance where "n" - "m" data storage drives of the pool equals zero, indicating that all drives of the pool have been assigned, a higher priority host application, e.g., priority "0", may take a drive already dedicated to a lower priority host application, e.g., priority "**1**". With the use of virtual libraries, the tables depict the option of assigning physical drives **97** to virtual libraries **90,** thereby defining a pool of data storage drives. If only one library was employed, all the data storage drives except spares constitute the pool of drives. Physical drive **"DR2"** is, at the moment, unassigned to any virtual drive, and is indicated as **"FREED"** and available for assignment. Physical drive **"DR7"** is reserved as a **"SPARE"** drive, and can only be used in the circumstance where "n" - "m" data storage drives of the pool equals zero, indicating that all drives of the pool have been assigned, and, either there is no priority reallocation, or all drives that could be reallocated have high priority assignments. If spares are authorized as shown by column **89,** the drive resource provider then allocates one of the spare drives to the request. Alternatively, the drive resource provider waits a predetermined time period, and, if during the predetermined time period a request for deallocation of a data storage drive and demount of any portable data storage cartridge at the deallocated data storage drive completes, allocates the deallocated data storage drive to the request; else, subsequent to expiration of the time period, the drive resource provider allocates the spare data storage drive to the request.

Subsequent to the allocation of the spare data storage drive, the drive resource provider posts a message indicating use of the spare data storage drive. The posted message may comprise a notification to a system manager that action may be taken to transfer a spare data storage drive to the pool. As an example, transferring a spare drive to the pool will result in an increased cost for the library. If the transfer is made, the drive resource provider adds the spare data storage drive to the pool, deleting the drive as a spare data storage drive.

As an incentive, the posted message may additionally comprise a notification that failure to transfer the spare drive to the pool will result in future unavailability of spare data storage drives, and the drive resource provider, upon absence of a request to transfer at least one spare data storage drive to the pool, deletes the assignment of the plurality of library data storage drives as spare drives at least to one virtual library, such that the assigned spare drives become unassigned to the virtual library or, alternatively, in the library system.

In drive image table **70** of virtual library **0,** virtual drive "**BB**" has no dedicated data storage drive, and is in the circumstance that the host application requires a physical drive. However, no physical drive, either a spare drive or a drive from a lower priority virtual library or lower priority virtual drive is available. Thus, the **"W"** means that there will be a wait until a data storage drive becomes available in the normal operation of the library.

FIG. **8** illustrates an embodiment of the method for configuring the data storage drives **15** of the library **17** of FIGS. **2** and **3,** or of configuring the virtual libraries.

The configuration begins at step **100** in a startup or initialization of the library. Alternatively, a physical drive may be added, deleted or replaced and the reconfiguration begun at step **101.** Still alternatively, a system operator, having used a spare data storage drive and received the message as discussed above, may choose to add one or more of the spare drives to a pool of drives, beginning at step **102.** If the system operator was presented with the choice of employing the spare drive in a pool or of losing the drive as a spare and chooses to lose the drive (an unlikely scenario), step **102** could also provide a reassignment of the formerly spare drive or drives to an "unassigned" status. No reconfiguration of the library is actually required in this circumstance.

Step **105** may be employed for the situation where the use of virtual libraries is optional, and determines whether virtual libraries implemented. If virtual libraries are implemented, **"YES",** step **106** determines the next virtual library to be configured. If virtual libraries are not implemented, **"NO",** the physical library will be configured for a single set of virtual drives. The process may be conducted by the library resource provider and/or the drive resource provider, and the library resource provider is required if virtual libraries are implemented. If virtual libraries are not implemented, the library image table **85** of FIG. **7** will comprise only a single library, eliminating column **90.**

In step **110,** the physical drives available to the library are determined. This information may be provided by the system operator or may comprise a default, for example, in which all of the number of drives are shared by all the virtual libraries. In step **111,** the spare drives are identified. The spare drives may be established at the time that the library **17** of FIGS. **2** and **3** is sold or installed, or may be set by the system operator to control the price paid for the library. The number of physical drives "n" in the pool of drives for the virtual library is the number of available physical drives PD less the number of spare drives SD.

In step **120,** the number of virtual drives and the fixed identification of each of the virtual drives are determined, for example, from the responsible system operator, or from the device driver, for communication with each host application. This comprises the identifier to be employed by the host application to address the fixed virtual drives, and as illustrated in column **75** of FIGS. **5A** and **5B,** in column **87** of FIG. **7,** and is used for the allocation shown in column **82** of FIG. **6.** The characterization information **76, 83** may also be obtained at this point. In step **115,** the relative priorities of the virtual libraries are determined, for example, by the system operator. As an alternative, relative priorities may be determined for the virtual drives. The resultant relative priorities are posted in column **88** of FIG. **7.** Then, in step **121,** the drive resource provider arranges the drive image table(s) **70, 71** for each drive image provider. The master drive image tables are maintained in the drive resource provider, mapping the allocated and dedicated drives of the pool of data storage drives to the virtual drives of each host application. As discussed above, the drive image tables may be accessed and refreshed or updated by the drive image providers periodically from the drive resource provider, or each drive image provider may access the associated drive image table as needed.

In step **125,** the library resource provider determines whether all of the virtual libraries have been configured. If so, or if virtual libraries have not been implemented, the process is ended as illustrated by step **126.** If not all of the virtual libraries have been configured, the process cycles back to step **106** to begin configuration of the next virtual library.

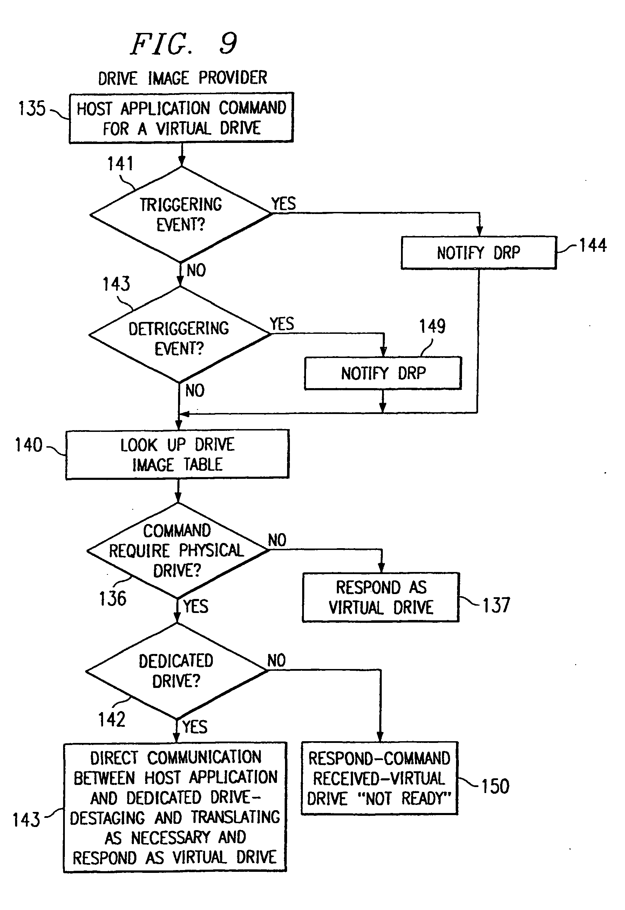

FIG. **9** illustrates the process of the drive image provider **30** of FIG. **1** when a host application provides a command for a virtual drive at step **135.** Examples of events are an INQUIRY command; a SEARCH command to search for specific data from a mounted portable data storage cartridge; a READ command to read data from a mounted portable data storage cartridge; a WRITE command to write data on a mounted portable data storage cartridge; a RESERVE command to reserve a data storage drive for future use; a RELEASE command to release a reserved data storage drive; or other similar types of commands.
The drive image provider, in steps **141** and **143,** determines whether the command received from the host application constitutes a triggering event or a detriggering event. If the command constitutes a triggering event, the drive image provider, in step **144,** notifies the drive resource provider of the event and identifies the virtual drive and may identify the host application. If the command constitutes a detriggering event, the drive image provider, in step **149,** notifies the drive resource provider of the event and identifies the virtual drive and may identify the host application.

In step **140,** the drive image provider looks up the virtual drive in the drive image table **70, 71** of FIGS. **5A, 5B** for the virtual library.

Step **136** determines whether the command of step **135** requires a physical drive to complete the response to the event. For example, SEARCH, READ, and WRITE commands all require a physical drive. An INQUIRY command does not require a physical drive, and a response may be provided by the drive image provider without a drive, and the response is provided in step **137.** The drive image provider responds as the addressed virtual drive, and employs the characteristics of the drive from the drive image table **70, 71** of FIGS. **5A, 5B,** or equivalent. SEARCH, READ, and WRITE commands will be provided by a host application if a portable data storage cartridge is mounted in the dedicated physical drive, thus, a MOUNT command will have been provided to the library.

Commands that lead to the allocation and dedication of a physical drive to a virtual drive are called triggering events, and comprise RESERVE commands and other commands having the effect of a request for a drive, such as an "are you there" type of command. Commands that lead to the deallocation of a physical drive are called detriggering events, and comprise RELEASE commands and other commands having the effect of releasing a drive. RESERVE and RELEASE commands, and commands requesting or releasing a virtual drive are received by the drive image provider.

In step **142,** the drive image provider determines from the drive image table whether a physical drive is dedicated to the virtual drive of the command. If a physical drive is dedicated to the virtual drive, "YES", the drive image provider, in step **143,** directs communication between the requesting host application and the dedicated data storage drive of the pool of "n" data storage drives of the automated data storage library. The communication is destaged and translated as necessary so that, from the standpoint of the host application, the communication appears to be between the host application and the virtual drive. The communication comprises all that is expected to follow as the result of the command, and will include the transfer of data, etc., with any expected headers, etc.

If the host application has issued a MOUNT command to the library, it then is likely to issue a SEARCH, etc., command to the virtual drive. The command may be received prior to the update of the drive image table by the drive resource provider. Hence, the drive image provider, prior to drive resource provider dedicating a physical data storage drive from the pool, in step **142,** determines from the drive image table that no physical drive has been dedicated to the requesting host application, and the drive image provider responds to the requesting host application with a fake completion response in step **150** having the effect of informing the host application that the request has been received, and that the virtual drive is "not ready" to complete any command requiring a mounted portable data storage cartridge. The drive image provider reports two types of "not ready" fake completion responses. In one example, if the virtual drive is indicated in the drive image table as waiting "w", the drive image provider reports that the virtual drive is "coming ready". In an alternative example, the drive image provider reports "cartridge not present" at the virtual drive. In either case, the "not ready" response is not an indication that any requested work is complete. Rather, it is a form of command rejection based on one of the two reasons.

Upon step **136** indicating that no physical drive is required, such as an INQUIRY, RESERVE, or RELEASE command, etc., as discussed above, the drive image provider responds as the addressed virtual drive, employing the characteristics of the virtual drive from the drive image table **70, 71** of FIGS. **5A, 5B.**

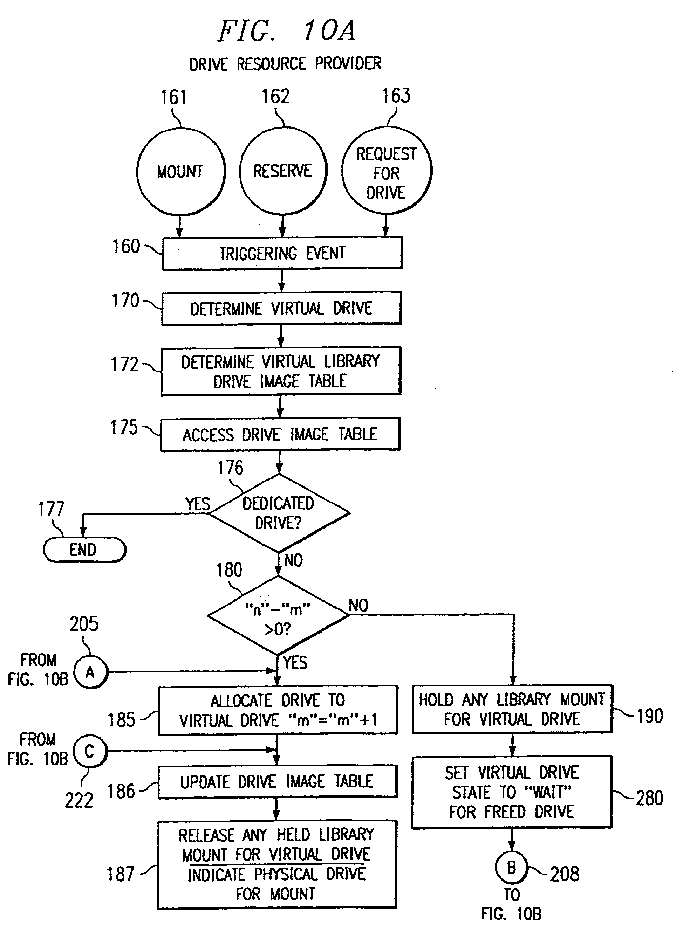

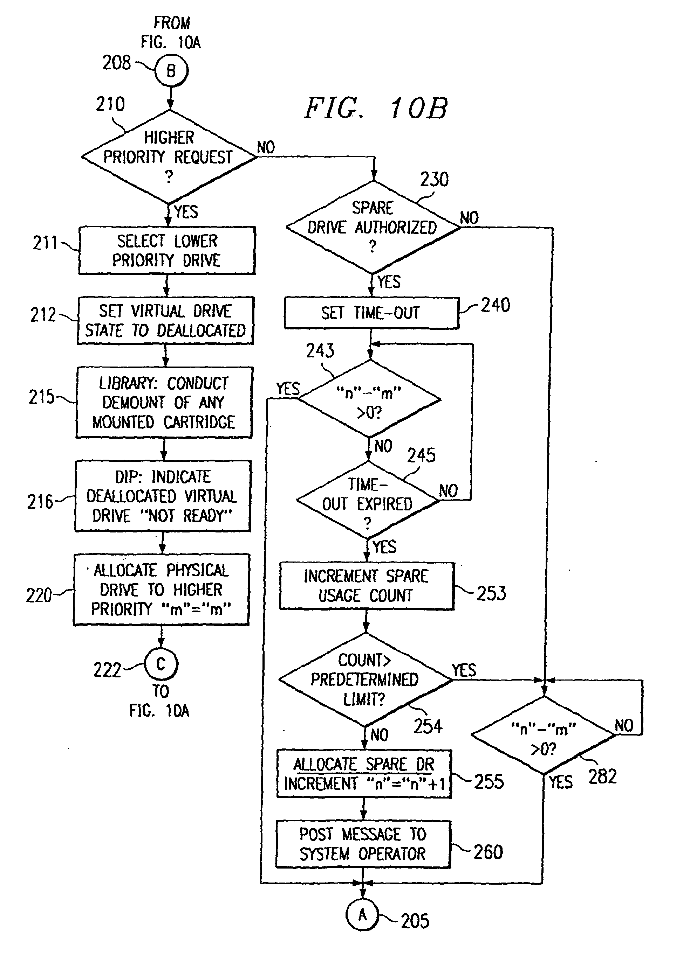

Referring to FIGS. **10A** and **10B,** step **160** refers to the occurrence of a triggering event, such as receipt of a MOUNT command **161,** a RESERVE command **162,** or a request **163** for a drive, such as an "are you there" request, with or without a request to lock the drive. The request will have been received by the drive image provider and the drive resource provider notified in step **144** of FIG. **9,** or, if a MOUNT command received directly by the library, or virtual library, it is provided to the drive resource provider as a direct triggering event.

In step **170,** the drive resource provider determines the virtual drive for which the triggering event is intended by the requesting host. This typically is determined from the notification or command itself. In step **172,** the drive resource provider determines the drive image table **70, 71** of FIGS. **5A** and **5B** for the virtual drive.

Having determined the drive image table, the drive resource provider accesses the drive image table in step **175.** In step **176,** the drive resource provider determines from the drive image table whether a physical drive is dedicated to the virtual drive of the event. If the drive has been dedicated, the process ends in step **177** and the drive image provider is directing communication between the requesting host application and the data storage drive as the virtual drive, as illustrated in step **143** of FIG. **9.**

If no drive has been dedicated, the drive resource provider, in step **180,** determines whether "n" - "m" is greater than zero, e.g., from the drive table **80** in FIG. **6.** If "n" - "m" is greater than zero, "YES", not all of the physical drives have been allocated and a physical drive is therefore available for allocation and dedication to the requesting host application. As discussed above, the pool of drives may comprise only data storage drives that are compatible with the characteristics of the virtual drive. As an example, many of the physical drives may be streaming drives and the requested virtual drive may instead be a stop-start drive.

If a physical drive is available, such that "n"-"m">0, the drive resource provider, in step **185,** allocates the physical drive to the virtual drive, dedicating the physical drive for the requesting host application. If more than one drive is available, the selection of the specific drive may be made in accordance with any appropriate algorithm. As one example, the drive having the closest characteristics to the virtual drive may be selected. As another example, the drive having been idle the longest may be selected. The drive resource provider thus increments "m" to the value "m"+1.

Upon allocating the physical data storage drive in step **185**, the drive resource provider updates the drive image table **70, 71** of FIG. **5A** or **5B.** As discussed above, the drive resource provider thus maps the allocated and dedicated drives of the pool of data storage drives to the virtual drives of each host application. The updated drive image tables may be accessed by the drive image providers periodically from the drive resource provider, or each drive image provider may access the associated drive image table as needed. The drive table **80** of FIG. **6** is also updated and may comprise the allocation of the drive of step **185.** In step **187,** the drive resource provider indicates to the library to release any hold of a mount of a portable data storage cartridge relative to the request, as will be discussed.

If no physical data storage drive is available, as indicated by step 180 determining that "n" - "m" is equal to zero, "NO", indicating that a request has been received for a data storage drive when all of the data storage drives of the pool are allocated, the drive resource provider, in step 190, indicates to the library to hold any mount of a portable data storage cartridge relative to the request. In this manner, the library does not initiate a mount, which would begin movement of the accessor robot to select the desired portable data storage cartridge, when no physical drive is available at which to mount the cartridge. Prevention of a mount without a drive prevents a potential lockup of the accessor robot with a cartridge to be mounted on one drive, while the same accessor robot may be required to demount another cartridge so as to make the drive of the demount available. Additionally, in step **190,** a fake completion response is provided to the mount request, which prevents a potential "command" lockup, in the instance where commands can only be dealt with in order. Once a drive is available and any cartridge has been demounted, the mount is released, in step **187.** If step **180** indicates that no drive is allocated, the drive resource provider, in step **280,** posts an indication "W" in the drive image table (e.g., table **70** of FIG. **5A)** for the drive image provider indicating that the drive resource provider is waiting for a freed drive.

various optional alternatives may be employed to allocate a physical drive, rather than just waiting for a presently allocated drive to be deallocated. These alternatives are discussed hereinafter, and may be implemented in any order.

If step **180** indicates that no drive is available, connector **208** leads to FIG. **10B** and to step **210.** Step **210** relates to the situation in which virtual libraries or virtual drives are assigned relative priorities, as depicted in column **88** of library image table **85** of FIG. **7.** Thus, with a plurality of virtual libraries, where at least one of the virtual libraries has a higher priority than other of the virtual libraries, the drive resource provider, in step **210** determines the priority of the virtual library or the requested virtual drive, and whether the requesting virtual library or virtual drive is of the higher priority. If the requesting virtual library or virtual drive is of the higher priority, the drive resource provider, in step **211,** selects a data storage drive from a lower priority virtual library. In step **212,** the drive resource provider deallocates the selected data storage drive from the drive image table of the lower priority virtual library, notifies the drive image provider of the deallocation, and notifies the library to demount, in step **215,** any portable data storage cartridge from the deallocated data storage drive. The drive image provider, in step **216,** characterizes the virtual drive of the deallocated data storage drive to its host application as "not ready". In step **220,** the drive resource provider allocates the deallocated data storage drive for the higher priority virtual library. Connector **222** leads to step **186,** where the drive is dedicated to the virtual drive of the requesting host application in the drive image table, and any hold of a mount is released in step **187.** Any work gueued in step **150** by the drive image provider is dequeued as the result of steps **185, 186** and **187.**

As discussed above, the drive resource provider may additionally assign at least one of the plurality of library data storage drives as spare drives, outside of any pool. Then, the drive resource provider may allocate a spare drive to the request. As one example, spare drives may be employed if no physical drives are assigned in lower priority situations. Alternatively, a spare drive may be requested only for high priority virtual libraries. Thus, if step **210** determines that the requesting virtual library or virtual drive is of high priority, step **230** determines whether use of a spare drive is authorized. Whether or not priority of the host application plays part in the determination, the authorization of spares may be determined, for example, from column **89** of library image table **85** of FIG. **7.**

Even though spares may be authorized, their use may be limited. As one example, a time-out is set in step **240,** so as to allow time for a data storage drive to be deallocated and freed, as detected by step **243.** If a drive is freed as indicated by step **243,** connector **205** leads to step 185 of FIG. **10A** to allocate the freed drive. If no drive is freed, as indicated by step **243,** step **245** determines whether the time-out period has expired. If not, "NO", the process cycles back to step **243** to wait for a freed drive.

If the time-out period has expired, still another limitation on use of a spare may be employed. As one example, the use of spare drives may be limited to a predetermined number of times. As will be discussed, the system operator may be requested to add drives to the pool of "n" drives and prevented from unlimited use of spare drives. Specifically, in step **253,** the drive resource provider increments a count each instance the request for a spare is received when all of the data storage drives of the pool are allocated. In step **254,** the drive resource provider compares the incremented count to a predetermined limit, and, upon the incremented count being less than the predetermined limit, in step **255,** allocates the spare data storage drive to the virtual library of the request. The drive table **80** of FIG. **6** and the library image table **85** of FIG. **7** are updated, moving the drive from a spare to a freed drive, temporarily incrementing the pool of drives "n" to a value of "n"+1, and assigning the drive to the virtual library of the request in column **97** of table **85.** Connector **205** leads to step **185** of FIG. **10A** for allocation of the now freed drive to the virtual drive of the requesting host application.

As an option, the drive resource provider additionally, subsequent to the allocation of the spare data storage drive, in step **260,** posts a message indicating use of the spare data storage drive. The posted message, in one embodiment, comprises a notification to a system manager that action may be taken to transfer a spare data storage drive to the pool. As an example, transferring a spare drive to the pool will result in an increased cost for the library. If the transfer is made, the drive resource provider permanently adds the spare data storage drive to the pool, deleting the drive as a spare data storage drive.

In another embodiment, as an incentive, the posted message additionally comprises a notification that failure to transfer the spare drive to the pool will result in future unavailability of spare data storage drives, and the drive resource provider, upon absence of a request to transfer at least one spare data storage drive to the pool, deletes the assignment of the data storage drives as a spare drive, such that the assigned spare drive becomes unassigned. As discussed above, the uses of spare drives may be limited by the predetermined limit of step **254.**

In the event that no spare drive is authorized in step **230,** or that the incremented count of step **253** has reached the predetermined limit of step **254,** the drive resource provider, in step **282,** awaits a request for deallocation of a data storage drive and demount of any portable data storage cartridge at the deallocated data storage drive, freeing the data storage drive. If no drive is freed, as determined by step **282,** the process continues to loop. Upon deallocation of a drive, step **282** leads to connector **205** of FIG. **10A** for allocation of the deallocated data storage drive to the virtual drive for the host application requesting the drive in step **185,** and indicating to the library to release the hold of any mount relative to the request in step **187.**

In addition to releasing any held library mount, the drive resource provider provides an indication of the dedicated physical data storage drive at which any held or any future mount is to be executed. The indication comprises the posting to the drive table **80** of FIG. **6,** which is accessed by the library. As a supplemental alternative for a release of a held mount, the indication of the dedicated physical data storage drive is provided with the release indication communicated to the library.

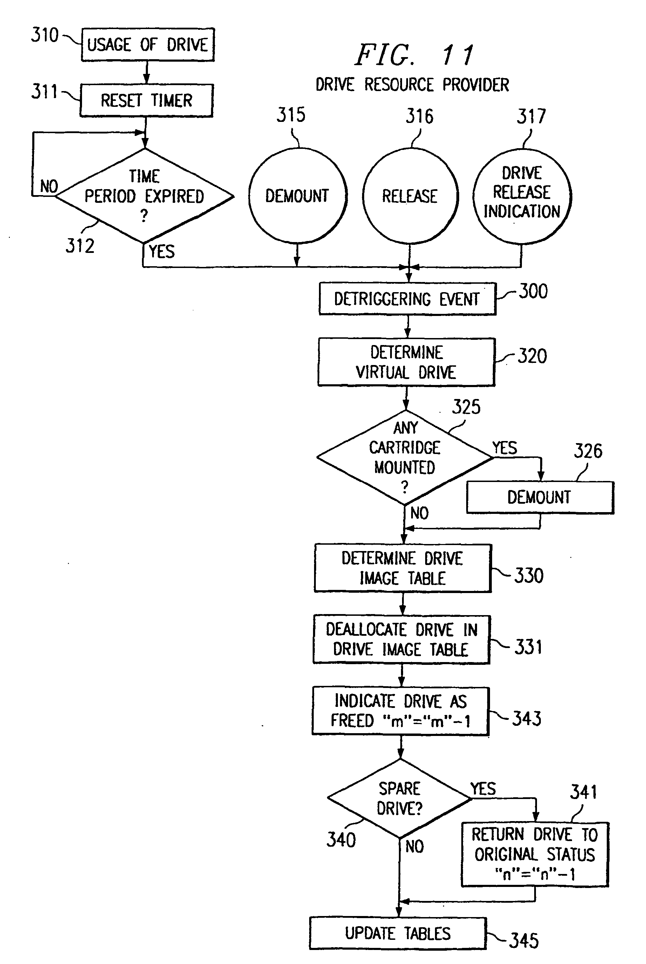

FIG. **11** relates to detriggering events of step **300.** One example of a detriggering event comprises non-use of a dedicated data storage drive for a predetermined time-out period. In one embodiment, the completion of a function comprising a usage of a drive is identified in step **310,** and, in step **311,** resets a timer for that drive. Then, step **312** continues to track the timer and indicates if the time period has expired.

Other detriggering events comprise a DEMOUNT request **315** to demount the cartridge from the virtual drive and move the cartridge to another point, such as a storage shelf; a RELEASE command **316** to release a reserved virtual data storage drive; and a drive release indication **317.** As discussed above, a DEMOUNT command is typically provided to the library and is not a command received by the drive image provider in step **135** of FIG. **9.** The library, upon receiving the DEMOUNT command, determines the physical data storage drive dedicated to the virtual drive, initiates the demount, and informs the data resource provider of the command. A RELEASE command or a command requesting release of a virtual drive is received by the drive image provider in step **135** of FIG. **9.** The drive image provider determines in step **143** that it is a detriggering event; and notifies the drive resource provider in step **149.** In step **320** of FIG. **11,** the drive resource provider determines the virtual drive for which the detriggering event is intended by the requesting host. This typically is determined from the command itself.

Step **325** determines whether a portable data storage cartridge is mounted in the drive. This may be determined, for example, from the library processor **45** of FIG. **1.** A DEMOUNT command will have resulted in a demount of the portable cartridge by the accessor robot, such that step **325** indicates that no cartridge is mounted in the drive. The other detriggering events may not occur with a portable cartridge mounted in a drive and may not comprise a demount. If a cartridge is mounted in the drive, the drive resource provider indicates to the library that the cartridge is to be demounted in step **326.**

In step **330,** the drive resource provider determines the drive image table **70, 71** of FIG. **5A** or **5B** for the virtual drive, or for the physical drive if steps **310-312** employ the physical drive.

The drive resource provider then, in step **331,** deallocates the drive from the virtual drive for the host application. The drive resource provider, in step **343,** then indicates that the drive is freed, decrementing "m" to "m"-1. Optionally, if spare drives are employed, step **340** determines whether the deallocated drive was shared drive. If so, step **341** returns the drive to its original status, decrementing "n" to "n"-1. If the drive was a spare, the system operator may subsequently respond to the message of step **260** of FIG. **10B** and add one or more spare drives to the pool. If the drive was not a spare drive, the drive resource provider proceeds directly to step **345.** In step **345,** the tables are updated, either returning the drive to its original status as a spare drive in drive table **80** of FIG. **6,** or indicating the drive as freed in the drive table of FIG. **6.**

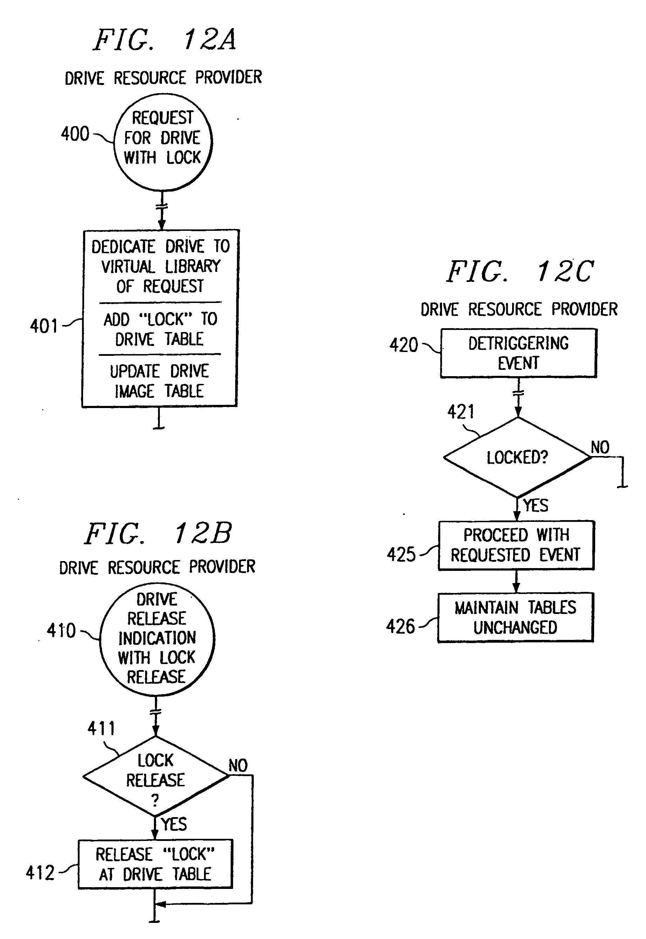

FIGS. **12A-12C** represent locking and unlocking a data storage drive to a virtual library. Step 400 of FIG. **12A** represents a triggering event **160** of FIG. **10A** in which a drive is requested with a lock. Step **401** is equivalent to step **185** of FIG. **10A** for dedicating the drive to the virtual drive, and additionally comprises adding the "lock" to the drive table, as illustrated by drive **"DR1"** of drive table **80** of FIG. **6.**

Step **410** of FIG. **12B** represents a detriggering event **300** of FIG. **11** in which a drive is released by the host application with a release of the lock. Step **411** may occur immediately subsequent to step **300,** and comprises a determination whether the command includes a release of the lock. If so, the lock is released by the drive resource provider, in step **412,** at the drive table **80** of FIG. **6.**

Step **420** represents a detriggering event **300** of FIG. **11** which does not comprise a release of a lock, such as a DEMOUNT command. Step **421** determines whether the drive is locked, referring, for example, to the drive table **80** of FIG. **6.** If the drive is not locked, the process of steps **320-345** of FIG. **11** is conducted. If the device is locked, and not unlocked in step **412** of FIG. **12B,** the requested event is conducted in step **425,** and the tables are maintained unchanged in step **426,** so that the drive thereby remains locked to the host application.

The steps of the above processes may be altered in sequence or combined and changed in detail as appropriate.

While the preferred embodiments of the present invention have been illustrated in detail, it should be apparent that modifications and adaptations to those embodiments may occur to one skilled in the art without departing from the scope of the present invention as set forth in the following claims.

## Claims

1. An allocation system (10) for allocating data storage drives (15) of an automated data storage library (17) in response to at least one request (163) for a data storage drive (15), said library storing a plurality of portable data storage cartridges (14) in storage shelves and transporting said portable data storage cartridges (14) between said storage shelves and said data storage drives (15) for mounting and demounting said portable data storage cartridges (14) at said data storage drives, comprising:
a drive resource provider (35), assigning a plurality of said library data storage drives (15) to a pool, and allocating and deallocating said data storage drives from said pool; **characterised by** said drive resource provider, upon receiving (163) said request for a data storage drive (15) when all of said data storage drives of said pool are allocated, indicating to said library (17) to hold (190) any mount of a portable data storage cartridge relative to said request.

2. The allocation system of Claim **1,** additionally comprising a drive image provider (30) coupled to said drive resource provider (35), which, upon receiving said request for a data storage drive (15) when all of said data storage drives (15) of said pool are allocated, indicates that said requested data storage drive (15) is currently unavailable to complete any subsequent command requiring a mounted portable data storage cartridge (14).

3. The allocation system of Claim **1,** or **2,** wherein said drive resource provider (30) additionally, subsequent to said indication, awaits a deallocation of a data storage drive (15) and demount of any portable data storage cartridge (14) at said deallocated data storage drive (15), allocates said deallocated data storage drive (15) to said request, and indicates to said library to release said hold of said mount relative to said request.

4. The allocation system of Claim **1, 2** or **3** wherein said drive resource provider (30) additionally assigns at least one of said plurality of library data storage drives (15) as spare data storage drives (15), outside of said pool, and, subsequent to said indication, allocates one of said at least one spare data storage drives (15) to said request, and indicating to said library (17) to release said hold of said mount relative to said request.

5. The allocation system of Claim **4,** wherein said drive resource provider (34), subsequent to said indication, waits a predetermined time period, and awaits a deallocation of a data storage drive (15) and demount of any portable data storage cartridge at said deallocated data storage drive (15); and, if during said predetermined time period said deallocation occurs, allocates said deallocated data storage drive (15) to said request; else, subsequent to expiration of said time period, allocates said spare data storage drive (15) to said request; and, upon said allocation of a data storage drive to said request, indicates to said library (17) to release said hold of said mount relative to said request.

6. The allocation system of Claim **4** or **5,** where said library (17) comprises a plurality of virtual libraries responsive to said at least one request for a data storage drive (15), said system allocating data storage drives (15) of said automated data storage library to said plurality of virtual libraries, at least one of said plurality of virtual libraries a higher priority than other of said virtual libraries; and wherein said drive resource provider (35) additionally determines said priority of said virtual library of said request for a data storage drive, and, only if said virtual library is of said higher priority, allocates said spare data storage drive to said request, and indicates to said library (17) to release said hold of said mount relative to said request.

7. The allocation system of Claim **4, 5** or **6** wherein said drive resource provider (35) additionally increments a count each instance said request is received when all of said data storage drives (15) of said pool are allocated, compares said incremented count to a predetermined limit, and, upon said incremented count being less than said predetermined limit, allocating said spare data storage drive.

8. The allocation system of Claim **4, 5** or **6** wherein said drive resource provider (35) additionally, subsequent to said allocation of said spare data storage drive, posts a message indicating use of said spare data storage drive.

9. The allocation system of Claim **8,** wherein said drive resource provider (35) posted message comprises a notification to a system operator that action may be taken to transfer at least one said spare data storage drive to said pool.

10. The allocation system of Claim **9,** wherein said drive resource provider (35) additionally responds to a request to transfer at least one spare data storage drive to said pool, adds at least one said spare data storage drive to said pool, deleting said data storage drive as a spare data storage drive.

11. The allocation system of Claim **10,** wherein said drive resource provider (35) posted message additionally comprises a notification that failure to transfer said data storage drive (15) to said pool will result in future unavailability of spare data storage drives, and wherein said drive resource provider (35), upon absence of a request to transfer at least one spare data storage drive (15) to said pool, deletes said assignment of at least one of said plurality of library data storage drives (15) as spare data storage drives, such that said assigned spare data storage drives become unassigned.

12. The allocation system of any one of Claims **1** to **11,** wherein said drive resource provider (35) additionally indicates that a fake completion response is to be provided in response to said mount.

13. An allocation method for allocating data storage drives (15) of an automated data storage library (17) in response to at least one request for a data storage drive (15), said library (17) storing a plurality of portable data storage cartridges (14) in storage shelves and transporting said portable data storage cartridges (14) between said storage shelves (16) and said data storage drives (15) for mounting and demounting said portable data storage cartridges (14) at said data storage drives (15), comprising the steps of:
assigning a plurality of said library data storage drives to a pool, and allocating and deallocating said data storage drives from said pool;
**characterised by**; upon receiving said request for a data storage drive (15) when all of said data storage drives of said pool are allocated, indicating to said library (17) to hold any mount of a portable data storage cartridge relative to said request.

14. A computer program product of a computer readable medium usable with a programmable computer, said computer program product having computer readable program code embodied therein for allocating data storage drives (15) of an automated data storage library (17) in response to at least one request for a data storage drive (15), said library (17) storing a plurality of portable data storage cartridges (14) in storage shelves (16) and transporting said portable data storage cartridges (14) between said storage shelves (16) and said data storage drives (15) for mounting and demounting said portable data storage cartridges (14) at said data storage drives (15), said at least one host application coupled to said data storage drives (15) and to said automated data storage library (17), comprising:
computer readable program code which causes a computer processor to assign a plurality of said library data storage drives (15) to a pool, and to allocate and deallocate said data storage drives from said pool;
computer readable program code which causes a computer processor to, upon receiving said request for a data storage drive when all of said data storage drives (15) of said pool are allocated, indicate to said library (17) to hold any mount of a portable data storage cartridge relative to said request.

## Patentansprüche

1. Zuordnungssystem (10) zum Zuordnen von Datenspeicherungslaufwerken (15) einer automatisierten Datenspeicherbibliothek (17) in Reaktion auf wenigstens eine Anforderung (163) nach einem Datenspeicherungslaufwerk (15), wobei die Bibliothek eine Vielzahl von tragbaren Datenspeicherkassetten (14) in Aufbewahrungsregalen aufbewahrt und die tragbaren Datenspeicherkassetten (14) zwischen den Aufbewahrungsregalen und den Datenspeicherungslaufwerken (15) transportiert, um die tragbaren Datenspeicherkassetten (14) an den Datenspeicherungslaufwerken einzubinden bzw. die Einbindung zu lösen, wobei das Zuordnungssystem umfasst:
einen Laufwerkbetriebsmittel-Anbieter (35), der eine Vielzahl der Bibliothek-Datenspeicherungslaufwerke (15) einem Vorrat zuweist und die Datenspeicherungslaufwerke aus diesem Vorrat zuweist bzw. die Zuweisung aufhebt; **dadurch gekennzeichnet, dass** der Laufwerkbetriebsmittel-Anbieter beim Empfangen (163) der Anforderung nach einem Datenspeicherungslaufwerk (15) dann, wenn alle Datenspeicherungslaufwerke des Vorrats zugewiesen sind, der Bibliothek (17) angibt, alle Einbindungen einer tragbaren Datenspeicherkassette in Bezug auf die Anforderung zu halten (190).

2. Zuordnungssystem nach Anspruch 1, das zusätzlich einen Laufwerkabbild-Anbieter (30) umfasst, der mit dem Laufwerkbetriebsmittel-Anbieter (35) verbunden ist und beim Empfangen der Anforderung nach einem Datenspeicherungslaufwerk (15) dann, wenn alle Datenspeicherungslaufwerke (15) des Vorrats zugewiesen sind, anzeigt, dass das angeforderte Datenspeicherungslaufwerk (15) momentan nicht zur Verfügung steht, um einen nachfolgenden Befehl, der eine eingebundene tragbare Datenspeicherkassette (14) anfordert, zu erfüllen.

3. Zuordnungssystem nach Anspruch 1 oder 2, bei dem der Laufwerkbetriebsmittel-Anbieter (30) außerdem nach der Angabe eine Freigabe eines Datenspeicherungslaufwerks (15) und eine Auflösung der Einbindung einer tragbaren Datenspeicherkassette (14) bei dem freigegebenen Datenspeicherungslaufwerk (15) abwartet, das freigegebene Datenspeicherungslaufwerk (15) der Anforderung zuordnet und der Bibliothek angibt, den Haltezustand der Einbindung in Bezug auf die Anforderung aufzuheben.

4. Zuordnungssystem nach Anspruch 1, 2 oder 3, bei dem der Laufwerkbetriebsmittel-Anbieter (30) außerdem wenigstens eines aus der Vielzahl von Bibliotheks-Datenspeicherungslaufwerken (15) als Ersatz-Datenspeicherungslaufwerk (15) außerhalb des Vorrats zuweist und nach der Angabe ein Ersatz-Datenspeicherungslaufwerk (15) der Anforderung zuordnet und der Bibliothek (17) anzeigt, den Haltezustand der Einbindung in Bezug auf die Anforderung aufzuheben.

5. Zuordnungssystem nach Anspruch 4, bei dem der Laufwerkbetriebsmittel-Anbieter (34) nach der Angabe eine vorgegebene Zeitdauer wartet und eine Freigabe des Datenspeicherungslaufwerks (15) und die Auflösung der Einbindung einer tragbaren Datenspeicherkassette an dem freigegebenen Datenspeicherungslaufwerk (15) abwartet; und dann, wenn während der vorgegebenen Zeitdauer die Freigabe erfolgt, das freigegebene Datenspeicherungslaufwerk (15) der Anforderung zuordnet; ansonsten nach dem Verstreichen der Zeitdauer das Ersatz-Datenspeicherungslaufwerk (15) der Anforderung zuordnet; und bei der Zuordnung eines Datenspeicherungslaufwerks zu der Anforderung der Bibliothek (17) angibt, den Haltezustand der Einbindung in Bezug auf die Anforderung aufzuheben.

6. Zuordnungssystem nach Anspruch 4 oder 5, bei dem die Bibliothek (17) eine Vielzahl virtueller Bibliotheken umfasst, die auf die wenigstens eine Anforderung nach einem Datenspeicherungslaufwerk (15) ansprechen, wobei das System Datenspeicherungslaufwerke (15) der automatisierten Datenspeicherbibliothek der Vielzahl von virtuellen Bibliotheken zuordnet, wobei wenigstens eine aus der Vielzahl von virtuellen Bibliotheken eine höhere Priorität besitzt als andere der virtuellen Bibliotheken; und wobei der Laufwerkbetriebsmittel-Anbieter (35) zusätzlich die Priorität der virtuellen Bibliothek der Anforderung nach einem Datenspeicherungslaufwerk ermittelt und nur dann, wenn die virtuelle Bibliothek die höhere Priorität besitzt, das Ersatz-Datenspeicherungslaufwerk der Anforderung zuordnet und der Bibliothek (17) angibt, den Haltezustand der Einbindung in Bezug auf die Anforderung aufzuheben.

7. Zuordnungssystem nach Anspruch 4, 5 oder 6, bei dem der Laufwerkbetriebsmittel-Anbieter (35) zusätzlich einen Zähler beim Empfangen der Anforderung immer dann erhöht, wenn alle Datenspeicherungslaufwerke (15) des Vorrats zugeordnet sind, den erhöhten Zählerstand mit einem vorgegebenen Grenzwert vergleicht und das Ersatz-Datenspeicherungslaufwerk zuordnet, wenn der erhöhte Zählerstand kleiner als der vorgegebene Grenzwert ist.

8. Zuordnungssystem nach Anspruch 4, 5 oder 6, bei dem der Laufwerkbetriebsmittel-Anbieter (35) zusätzlich nach der Zuordnung des Ersatz-Datenspeicherungslaufwerks eine Nachricht versendet, die die Verwendung des Ersatz-Datenspeicherungslaufwerks anzeigt.

9. Zuordnungssystem nach Anspruch 8, bei dem die versendete Nachricht des Laufwerkbetriebsmittel-Anbieters (35) eine Benachrichtigung an einen Systembetreiber enthält, dass eine Aktion unternommen werden kann, um wenigstens das eine Ersatz-Datenspeicherungslaufwerk an den Vorrat zu übertragen.

10. Zuordnungssystem nach Anspruch 9, bei dem der Laufwerkbetriebsmittel-Anbieter (35) außerdem auf eine Anforderung reagiert, um wenigstens ein Ersatz-Datenspeicherungslaufwerk an den Vorrat zu übertragen, und wenigstens ein Ersatz-Datenspeicherungslaufwerk an den Vorrat überträgt, wobei das Datenspeicherungslaufwerk als Ersatz-Datenspeicherungslaufwerk gelöscht wird.

11. Zuordnungssystem nach Anspruch 10, bei dem die versendete Nachricht des Laufwerkbetriebsmittel-Anbieters (35) außerdem eine Benachrichtigung enthält, dass ein Misslingen der Übertragung des Datenspeicherungslaufwerks (15) an den Vorrat die zukünftige Nichtverfügbarkeit von Ersatz-Datenspeicherungslaufwerken zur Folge hat, und bei dem der Laufwerkbetriebsmittel-Anbieter (35) beim Fehlen einer Anforderung zur Übertragung von wenigstens einem Ersatz-Datenspeicherungslaufwerk (15) an den Vorrat die zuweisung von wenigstens einem aus der Vielzahl von Bibliotheks-Datenspeicherungslaufwerken (15) als Ersatz-Datenspeicherungslaufwerk löscht, so dass die zugewiesenen Ersatz-Datenspeicherungslaufwerke freigegeben werden.

12. Zuordnungssystem nach einem der Ansprüche 1 bis 11, bei dem der Laufwerkbetriebsmittel-Anbieter (35) außerdem anzeigt, dass in Reaktion auf die Einbindung eine Pseudo-Beendigungsantwort bereitgestellt werden soll.

13. Zuordnungsverfahren zum Zuordnen von Datenspeicherungslaufwerken (15) einer automatisierten Datenspeicherbibliothek (17) in Reaktion auf wenigstens eine Anforderung nach einem Datenspeicherungslaufwerk (15), wobei die Bibliothek (17) eine Vielzahl von tragbaren Datenspeicherkassetten (14) in Aufbewahrungsregalen aufbewahrt und die tragbaren Datenspeicherkassetten (14) zwischen den Aufbewahrungsregalen (16) und den Datenspeicherungslaufwerken (15) transportiert, um die tragbaren Datenspeicherkassetten (14) an den Datenspeicherungslaufwerken (15) einzubinden bzw. die Einbindung zu lösen, wobei das Verfahren die folgenden Schritte umfasst:
Zuweisen einer Vielzahl der Bibliotheks-Datenspeicherungslaufwerke (15) zu einem Vorrat und
Zuordnen bzw. Freigeben der Datenspeicherungslaufwerke aus dem Vorrat;
**dadurch gekennzeichnet, dass** beim Empfangen der Anforderung nach einem Datenspeicherungslaufwerk (15) dann, wenn alle Datenspeicherungslaufwerke des Vorrats zugeordnet sind, der Bibliothek (17) angegeben wird, alle Einbindungen einer tragbaren Datenspeicherkassette in Bezug auf die Anforderung zu halten.

14. Computerprogrammprodukt eines computerlesbaren Mediums, das mit einem programmierbaren Computer verwendet werden kann, wobei das Computerprogrammprodukt einen computerlesbaren Programmcode enthält, der darin ausgeführt werden kann, um Datenspeicherungslaufwerke (15) einer automatisierten Datenspeicherbibliothek (17) in Reaktion auf wenigstens eine Anforderung nach einem Datenspeicherungslaufwerk (15) zuzuordnen, wobei die Bibliothek (17) eine Vielzahl von tragbaren Datenspeicherkassetten (14) in Aufbewahrungsregalen (16) aufbewahrt und die tragbaren Datenspeicherkassetten (14) zwischen den Aufbewahrungsregalen (16) und den Datenspeicherungslaufwerken (15) transportiert, um die tragbaren Datenspeicherkassetten (14) an den Datenspeicherungslaufwerken (15) einzubinden bzw. die Einbindung zu lösen, wobei die wenigstens eine Hostanwendung mit den Datenspeicherungslaufwerken (15) und der automatisierten Datenspeicherbibliothek (17) verbunden ist, wobei das Computerprogrammprodukt umfasst:
computerlesbaren Programmcode, der bewirkt, dass ein Computerprozessor eine Vielzahl der Bibliotheks-Datenspeicherungslaufwerke (15) einem Vorrat zuweist und die Datenspeicherungslaufwerke aus dem Vorrat zuordnet und freigibt;
computerlesbaren Programmcode, der bewirkt, dass ein Computerprozessor beim Empfangen der Anforderung nach einem Datenspeicherungslaufwerk dann, wenn alle Datenspeicherungslaufwerke (15) des Vorrats zugeordnet sind, der Bibliothek angibt, alle Einbindung einer tragbaren Datenspeicherkassette in Bezug auf die Anforderung zu halten.

## Revendications

1. Un système d'allocation (10) pour allouer des unités de stockage de données (15) d'une bibliothèque de stockage de données (17) automatisée, en réponse à au moins une requête (163) pour une unité de stockage de données (15), ladite bibliothèque stockant une pluralité de cartouches de stockage de données (14) portables, dans des rayonnages de stockage, et transportant lesdites cartouches de stockage de données (14) portables entre lesdits rayonnages de stockage et lesdites unités de stockage de données (15), pour montage et démontage des dites cartouches de stockage de données (14) portables auxdites unités de stockage de données, comprenant :
un fournisseur de ressources d'unité (35), affectant une pluralité des dites unités de stockage de données (15) de bibliothèque à un groupe, et allouant et désallouant lesdites unités de stockage de données depuis ledit groupe ; **caractérisé par le fait que** ledit fournisseur de ressources d'unités, à réception de ladite requête (163) pour une unité de stockage (15), lorsque la totalité des dites unités de stockage de données dudit groupe sont allouées, indique à ladite bibliothèque (17) de mettre en attente (190) un montage quelconque parmi les cartouches de stockage de données portables par rapport à ladite requête.

2. Le système d'allocation selon la revendication 1, comprenant à titre additionnel un fournisseur d'image d'unité (30) couplé audit fournisseur de ressources d'unité (35), qui, à réception de ladite requête pour une unité de stockage de données (15), lorsque la totalité des dites unités de stockage de données (15) dudit groupe sont allouées, indique que ladite unité de stockage de données (15) requise est actuellement indisponible pour achever une éventuelle instruction subséquente, demandant de monter une cartouche de stockage de données (14) portable.

3. Le système d'allocation selon la revendication 1 ou 2, dans lequel ledit fournisseur de ressources d'unité (30) à titre additionnel, subséquemment à ladite indication, attend une désallocation d'une unité de stockage de données (15) et un démontage d'une éventuelle cartouche de stockage de données (14) portable à la dite unité de stockage de données (15) désallouée, alloue ladite unité de stockage de données (15) désallouée à ladite requête, et indique à ladite bibliothèque de libérer ladite mise en attente monté par rapport à ladite requête.

4. Le système d'allocation selon la revendication 1, 2 ou 3 dans lequel ledit fournisseur de ressources d'unité (30) affecte à titre additionnel au moins l'une de ladite pluralité d'unités de stockage de données (15) de la bibliothèque, en tant qu'unités de stockage de données (15) de réserve, hors dudit groupe et, subséquemment à ladite indication, alloue l'une de ladite au moins une unité de stockage de données (15) de réserve à ladite requête et indique à ladite bibliothèque (17) de libérer ladite mise en attente dudit montage par rapport à ladite requête.

5. Le système d'allocation selon la revendication 4, dans lequel ledit fournisseur de ressources d'unité (34) subséquemment à ladite indication, attend une période de temps prédéterminée et attend une désallocation d'une unité de stockage de données (15) et un démontage d'une cartouche de stockage de données portable quelconque à ladite unité de stockage de données (15) désallouée ; et si, durant ladite période de temps prédéterminée, ladite désallocation se produit, alloue ladite unité de stockage de données (15) désallouée à ladite requête ; sinon, subséquemment à l'expiration de ladite période de temps, alloue ladite unité de stockage de données (15) de réserve à ladite requête ; et, lors de ladite allocation d'une unité de stockage de données à ladite requête, indique à ladite bibliothèque (17) de libérer ladite mise en attente dudit montage par rapport à ladite requête.

6. Le système d'allocation selon la revendication 4 ou 5, dans lequel ladite bibliothèque (17) comprend une pluralité de bibliothèques virtuelles, réagissant à ladite au moins une requête pour une unité de stockage de données (15), ledit système allouant lesdites unités de stockage de données (15) de la bibliothèque de stockage de données automatisée à ladite pluralité de bibliothèques virtuelles, au moins l'une de ladite pluralité de bibliothèques virtuelles ayant une priorité supérieure à d'autres desdites bibliothèques virtuelles ; et dans lequel ledit fournisseur de ressources d'unité (35), en plus, détermine ladite priorité de ladite bibliothèque virtuelle de ladite requête pour une unité de stockage de données et, uniquement si ladite bibliothèque virtuelle est de ladite priorité supérieure, alloue ladite unité de stockage de données de réserve à ladite requête, et indique à ladite bibliothèque (17) de libérer ladite mise en attente dudit montage par rapport à ladite requête.

7. Le système d'allocation selon la revendication 4, 5 ou 6, dans lequel ledit fournisseur de ressources d'unité (35), en plus, incrémente un comptage à chaque instance à laquelle ladite requête est reçue, lorsque la totalité desdites unités de stockage de données (15) dudit groupe sont allouées, compare ledit comptage incrémenté à une limite prédéterminée, et, lorsque ledit comptage incrémenté est de valeur inférieure à ladite limite prédéterminée, alloue ladite unité de stockage de données de réserve.

8. Le système d'allocation selon la revendication 4, 5 ou 6, dans lequel ledit fournisseur de ressources d'unité (35), en plus, subséquemment à ladite allocation de ladite unité de stockage de données de réserve, envoie un message, indiquant l'utilisation de ladite unité de stockage de données de réserve.

9. Le système d'allocation selon la revendication 8, dans lequel ledit message, envoyé par ledit fournisseur de ressources d'unité (35), comprend une notification, à un opérateur système, du fait que l'action doit être effectuée pour transférer au moins une dite unité de stockage de données de réserve audit groupe.

10. Le système d'allocation selon la revendication 9, dans lequel ledit fournisseur de ressources d'unité (35) répond en plus à une requête pour transférer au moins une unité de stockage de données de réserve audit groupe, ajoute au moins une dite unité de stockage de réserve audit groupe, en supprimant la dite unité de stockage de données en tant qu'unité de stockage de données de réserve.

11. Le système d'allocation selon la revendication 10, dans lequel ledit message, envoyé par le fournisseur de ressources d'unité (35), comprend en plus une notification du fait qu'un échec du transfert de ladite unité de stockage de données (15) audit groupe va entraîner une future indisponibilité des unités de stockage de données de réserve, et dans lequel ledit fournisseur de ressources d'unité (35), en cas d'absence d'une requête demandant le transfert d'au moins une unité de stockage de données de réserve (15) audit groupe, supprime ladite affectation d'au moins une de ladite pluralité d'unités de stockage de données (15) de bibliothèque en tant qu'unités de stockage de données de réserve, de manière que lesdites unités de stockage de données de réserve affectées deviennent non affectées.

12. Le système d'allocation selon l'une quelconque des revendications 1 à 11, dans lequel ledit fournisseur de ressources d'unité (35), en plus, indique qu'une réponse d'achèvement fausse doit être fournie en réponse audit montage.

13. Un procédé d'allocation, pour allouer des unités de stockage de données (15) d'une bibliothèque de stockage de données (17) automatisée, en réponse à au moins une requête pour une unité de stockage de données (15), ladite bibliothèque (17) stockant une pluralité de cartouches de stockage de données (14) portable dans des rayons de stockage et transportant lesdites cartouches de stockage de données (14) portables entre lesdits rayons de stockage (16) et lesdites unités de stockage de données (15), pour montage et démontage des dites cartouches de stockage de données (14) portables aux dites unités de stockage de données (15), comprenant les étapes consistant à :
affecter une pluralité des dites unités de stockage de données de bibliothèque à un groupe, et allouer et désallouer lesdites unités de stockage de données dudit groupe ;
**caractérisé par** : à réception de ladite requête pour unité de stockage de données (15), lorsque la totalité desdites unités de stockage de données dudit groupe sont allouées, l'indication, à ladite bibliothèque (17), de mettre en attente un montage éventuel d'une cartouche de stockage de données portable par rapport à ladite requête.

14. Un produit de programme pour ordinateur, d'un support lisible par ordinateur, utilisable avec un ordinateur programmable, ledit produit de programme pour ordinateur comprenant un code de programme lisible par ordinateur, y étant incorporé, pour allouer des unités de stockage de données (15) d'une bibliothèque de stockage de données (17) automatisée, en réponse à au moins une requête pour une unité de stockage de données (15), ladite bibliothèque (17) stockant une pluralité de cartouches de stockage de données (14) portables dans des rayons de stockage (16), et transportant lesdites cartouches de stockage de données (14) portables entre lesdits rayons de stockage (16) et lesdites unités de stockage de données (15), pour montage et démontage desdites cartouches de stockage de données (14) portables aux dites unités de stockage de données (15), ladite au moins une application hôte, couplée aux dites unités de stockage de données (15) et à ladite bibliothèque de stockage de données (17) automatisée, comprenant :
un code de programme lisible par ordinateur, qui provoque l'affectation, par un processeur d'ordinateur, d'une pluralité desdites unités de stockage de données (15) de bibliothèque à un groupe, et l'allocation et la désallocation desdites unités de stockage de données depuis ledit groupe ;
un code de programme lisible par ordinateur, qui provoque, de la part d'un processeur d'ordinateur, à réception de ladite requête pour une unité de stockage de données, lorsque la totalité des dites unités de stockage de données (15) dudit groupe sont allouées, l'indication à ladite bibliothèque (17) de mettre en attente un montage quelconque d'une cartouche de stockage de données portable par rapport à ladite requête.
